# EUROPÄISCHE PATENTSCHRIFT

(11) **EP 3 625 018 B1**
(45) Veröffentlichungstag und Bekanntmachung des Hinweises auf die Patenterteilung: **30.08.2023**
(21) Anmeldenummer: 18729874.0
(22) Anmeldetag: 14.05.2018
(51) Int. Cl.: B29C 43/24, H01M 4/04, B29C 43/58, H01G 11/28, H01G 11/50, H01G 11/70, H01M 4/139, H01M 4/66, H01G 11/86, B29C 43/32, B29C 43/00, B29K 427/18, B29K 507/04, B29K 105/12, B29K 705/10, B29K 705/00, B29L 31/34, B29K 105/16, B29C 43/28, H01M 4/1391, H01G 11/06

(54) **VERFAHREN ZUM HERSTELLEN EINES TROCKENFILMS**
METHOD FOR PRODUCING A DRY FILM
PROCÉDÉ DE PRODUCTION D'UN FILM SEC

(30) Priorität: 16.05.2017 DE 102017208220
(43) Veröffentlichungstag der Anmeldung: 25.03.2020
(60) Teilanmeldung: 22192127.3
(73) Patentinhaber: Fraunhofer-Gesellschaft zur Förderung der angewandten Forschung e.V., 80686 München (DE); Technische Universität Dresden, 01069 Dresden (DE)
(72) Erfinder: ALTHUES, Holger, 01309 Dresden (DE); TSCHÖCKE, Sebastian, 01157 Dresden (DE); SCHUMM, Benjamin, 01307 Dresden (DE); KASKEL, Stefan, 01159 Dresden (DE); SCHULT, Christian, 01259 Dresden (DE); FRITSCHE, Daniel, 01099 Dresden (DE); SCHÖNHERR, Kay, 01237 Dresden (DE)
(74) Vertreter: Pfenning, Meinig & Partner mbB
(86) Internationale Anmeldenummer: PCT/EP2018/062334
(87) Internationale Veröffentlichungsnummer: WO 2018/210723

(56) Entgegenhaltungen:
- JP-A- 2010 171 366
- JP-B2- 3 111 195
- US-A1- 2004 182 695
- US-A1- 2010 224 893
- US-A1- 2013 157 141
- US-A1- 2014 342 225
- US-A1- 2015 224 529
- US-A1- 2016 190 600
- US-A1- 2017 040 591
- US-B1- 6 368 365

## Beschreibung

Die vorliegende Erfindung betrifft ein Verfahren zum Herstellen eines Substrats.

Beim Herstellen von Batterieelektroden müssen 50 µm bis 100 µm dicke Schichten mit hohen Bahngeschwindigkeiten auf metallische Stromableiter aufgetragen werden. Dies erfolgt typischerweise mittels nasschemischer Rolle-zu-Rolle-Verfahren aus Suspensionen von Aktivmaterialien in wässrigen oder organischen Lösemitteln. Hierfür ist ein hoher Energieeintrag sowohl für das Dispergieren des Aktivmaterials als auch für das Trocknen der Schicht notwendig. Es wird zunehmend angestrebt, die Beschichtung lösemittelfrei, also trocken zu realisieren. Dafür müssen trockene Pulvergemische aus Aktivmaterial, Leitadditiven und geeigneten Bindern in mechanisch belastbare Schichten überführt werden.

Aus dem Stand der Technik sind Verfahren bekannt, bei denen, wie in US 7352558 B2 offenbart, ein Verpressen zu einem freistehenden Film erfolgt. Hierzu wird gewöhnlich ein dreistufiger Prozess durchgeführt, bei dem ein Fibrillieren einer Trockenpulvermischung mittels einer Luftstrahlmühle, ein Fördern von Pulver in einen Kalanderspalt, in dem das Verpressen zu dem freistehenden Film erfolgt, und ein nachträgliches Aufbringen des freistehenden Films auf einen Stromableiter erfolgt. Dieses Verfahren ermöglicht zwar eine kontinuierliche Verarbeitung, jedoch sind die Mehrstufigkeit und vor allem der Zwischenschritt über einen schwer handhabbaren freistehenden Film problematisch.

Bei einem anderen Verfahren, das in DE 10 2010 044 552 B4 offenbart ist, erfolgt der Auftrag des Trockenpulvergemischs auf das Zielsubstrat mittels elektrostatischer Aufladung und nachgelagerter Wärmebehandlung zur mechanischen Stabilisierung durch einen thermoplastischen Binder. Nachteilig ist hieran, dass dem Pulverauftrag eine Nachverdichtung bzw. mechanische Stabilisierung durch Kalandrieren angeschlossen werden muss und somit ein zusätzlicher Prozessschritt nötig ist. Außerdem müssen für dieses Verfahren flächige Zielsubstrate verwendet werden.

Aus DE 10 2014 208 145 B3 ist eine Batteriezelle mit einer beschichteten Elektrode sowie deren Herstellung bekannt.

US 2015/0224529 A1 betrifft eine Vorrichtung zur Herstellung eines Filmprodukts.

Ein Verfahren zur Herstellung einer Gasdiffusionselektrode ist aus US 2004/0182695 A1 bekannt.

Die US 2017/040591 A1 offenbart ein Verfahren zum Herstellen eines Trockenfilms, bei dem eine Trockenpulvermischung durch eine Walzvorrichtung mit einer ersten Walze und einer zweiten Walze zu einem Trockenfilm verarbeitet wird, wobei die erste Walze eine höhere Drehumfangsgeschwindigkeit als die zweite Walze aufweist und der Trockenfilm auf der ersten Walze gelagert wird.

Die US 2013/157141 A1 offenbart ein Verfahren zum Herstellen eines Trockenfilms, bei dem eine Trockenpulvermischung durch eine Walzvorrichtung mit einer ersten Walze und einer zweiten Walze zu einem Trockenfilm verarbeitet wird, wobei die erste Walze eine höhere Drehumfangsgeschwindigkeit als die zweite Walze aufweisen kann.

Der vorliegenden Erfindung liegt daher die Aufgabe zugrunde, ein Verfahren vorzuschlagen, das die genannten Nachteile vermeidet, mit dem also Trockenfilme in effizienter und mechanisch stabiler Weise auf ein Substrat aufgebracht werden können.

Diese Aufgabe wird erfindungsgemäß durch ein Verfahren nach Anspruch 1 gelöst. Vorteilhafte Ausgestaltungen und Weiterbildungen sind in den abhängigen Ansprüchen beschrieben.

Bei einem Verfahren zum Herstellen eines Trockenfilms wird eine Trockenpulvermischung durch eine Walzvorrichtung, die eine erste Walze und eine zweite Walze aufweist, zu dem Trockenfilm verarbeitet. Die erste Walze weist hierbei eine höhere Drehumfangsgeschwindigkeit als die zweite Walze auf, wobei eine Trockenpulvermischung eingesetzt wird, die Polytetrafluorethylen enthält, und wobei die erste Walze und/oder die zweite Walze mindestens eine beheizbare Walze ist und die Temperatur der mindestens einen beheizbaren Walze zwischen 80 °C und 120 °C liegt. Das Verfahren ist dadurch gekennzeichnet, dass der entstandene Trockenfilm auf der ersten Walze gelagert wird und ein Verhältnis der Drehumfangsgeschwindigkeit der ersten Walze zu der Drehumfangsgeschwindigkeit der zweiten Walze von 10:5 bis 10:1 eingehalten wird.

Durch die mit unterschiedlichen Drehumfangsgeschwindigkeiten der beiden Walzen betriebene Walzvorrichtung wird eine mechanische Stabilisierung und Filmbildung auf der ersten Walze, die sich schneller dreht als die zweite Walze, erreicht. Somit wird ein Ausbilden eines freistehenden Films vermieden und es kann unmittelbar eine Weiterverarbeitung des auf der ersten Walze geträgerten bzw. gelagerten Trockenfilms erfolgen.

Typischerweise wird der Trockenfilm nach der Verarbeitung von den beiden Walzen auf ein Substrat aufgebracht, vorzugsweise auf das Substrat laminiert, alternativ oder zusätzlich kann dies allerdings bereits beim Generieren des Trockenfilms erfolgen. Sofern das Substrat eine ausreichende Rauigkeit aufweise, beispielsweise als Metalldrahtgewebe oder Kohlefasermatte ausgestaltet ist, kann der Trockenfilm auch aufgrund einer erfolgenden Verzahnung auch mit dem Substrat verpresst werden. Es kann allerdings auch vorgesehen sein, den Trockenfilm von der ersten Walze zu lösen, beispielsweise mittels eines Rakelmessers. Der hergestellte Trockenfilm weist, bedingt durch die unterschiedlichen Walzengeschwindigkeiten (die einen Abstand sich im Trockenfilm ausbildender Strukturen beeinflussen) und einer Presskraft (die einen Einfluss auf eine Strukturhöhe dieser Strukturen hat) typischerweise eine Fibrillenstruktur mit einer Rauheit Rₐ von 10 µm oder weniger auf.

Erfindungsgemäß liegt ein Verhältnis der Drehumfangsgeschwindigkeit der ersten Walze zu der Drehumfangsgeschwindigkeit der zweiten Walze zwischen 10:5 bis 10:1. Vorzugsweise wird ein Verhältnis von 10:5 bis 10:3, besonders vorzugsweise von 2:1, eingehalten. Hierdurch wird auf das Pulver im Spalt zwischen den beiden Walzen eine Scherkraft ausgeübt, die eine Fibrillenbildung entlang der Laufrichtung bewirkt. Somit kann der Trockenfilm mit einer Riffelstruktur ausgebildet werden, bei der bedingt durch die unterschiedlichen Walzengeschwindigkeiten eine Periodizität der Struktur erkennbar ist.

Ein Umfang der ersten Walze entspricht typischerweise einem Umfang der zweiten Walze, so dass sich ein einfacher Aufbau mit zwei Walzen gleichen Durchmessers ergibt. Es kann aber auch vorgesehen sein - beispielsweise um definierte Drehgeschwindigkeiten unter Berücksichtigung des jeweiligen Umfangs zu erreichen - die erste Walze und die zweite Walze mit unterschiedlichen Durchmessern und somit unterschiedlichen Walzenumfängen auszugestalten.

Die Walzvorrichtung kann als eine Kalanderwalzvorrichtung ausgebildet sein. Durch beheizbare Walzen kann eine weitere Verfestigung des Trockenfilms erreicht werden. Durch beheizbare Walzen bzw. mindestens eine beheizbare Walze kann das Ausbilden der Fibrillenstruktur unterstützt werden. Erfindungsgemäß ist die erste Walze und/oder die zweite Walze mindestens eine beheizbare Walze. Bei einem Binder aus Polytetrafluorethylen (PTFE) sollte eine Temperatur der mindestens einen beheizbaren Walze zwischen 80 °C und 120 °C liegen. Erfindungsgemäß liegt die Temperatur der mindestens einen beheizbaren Walze zwischen 80 °C und 120 °C.

In bevorzugter Weise ist die zweite Walze, die eine niedrigere Drehumfangsgeschwindigkeit als die erste Walze aufweist, mit einer Modifizierung, vorzugsweise einer Beschichtung auf ihrer Oberfläche, versehen, die gegenüber dem sich ausbildenden Trockenfilm abweisend und bzw. oder haftmindernd ist, so dass der Trockenfilm leichter entfernt werden kann. Die Beschichtung kann Polytetrafluorethylen (PTFE), Silikon und bzw. oder diamantähnlichem Kohlenstoff aufweisen bzw. daraus bestehen. Alternativ oder zusätzlich kann die erste Walze eine entsprechende Modifizierung aufweisen, die haftvermittelnd für den sich ausbildenden Trockenfilm wirkt. Die Modifizierung kann auch durch eine aufgeraute Oberfläche realisiert sein, beispielsweise indem die erste Walze eine Oberfläche mit einer größeren Rauheit als die zweite Walze aufweist. Insbesondere kann die Oberfläche der zweiten Walze glatt poliert sein.

Der Trockenfilm wird typischerweise auf ein Substrat aufgebracht, vorzugsweise laminiert, und zum Aufbringen bzw. Laminieren mit einer Geschwindigkeit bewegt, die der Drehumfangsgeschwindigkeit der ersten Walze entspricht. Dies ermöglicht einen fließenden Übertrag des Trockenfilms von der ersten Walze auf das Substrat aufgrund der einander angepassten Geschwindigkeiten.

In bevorzugter Weise wird das Substrat über die erste Walze bewegt, während der Trockenfilm auf dem Substrat ausgebildet wird. Hierdurch wird eine gleichzeitig mit dem Bewegen des Substrats erfolgende, direkte Ausbildung der Trockenschicht unterstützt. Falls das Substrat zusammen mit einer Primerfolie direkt über die erste Walze geführt wird, kann eine Haftvermittlerschicht auf das Substrat aufgebracht werden.

Es kann vorgesehen sein, dass der Trockenfilm von der ersten Walze und der zweiten Walze mit einer zwischen der ersten Walze und der zweiten Walze im Walzenspalt wirkenden Linienkraft von 100 N/cm bis 10 kN/cm, vorzugsweise 400 N/cm ausgebildet wird, um eine ausreichende mechanische Verfestigung des Trockenfilms zu erreichen.

Typischerweise ist das Substrat aus einem metallischen Werkstoff ausgebildet bzw. weist diesen metallischen Werkstoff auf, um als Elektrode für eine Energiespeichereinheit dienen zu können.

Das Substrat kann vor dem Laminieren des Trockenfilms auf einer jeweiligen, zum Aufbringen bzw. Laminieren vorgesehenen Oberfläche mit einem Primer und bzw. oder einem Binder versehen werden. Somit wird eine verbesserte Verbindung erreicht. In bevorzugter Weise wird hierfür ein thermoplastischer Primer und bzw. oder ein thermoplastischer Binder verwendet. Alternativ oder zusätzlich kann auch ein reaktiver Primer oder ein Klebstoff Verwendung finden. Die Primerschicht kann leitfähigen Ruß und bzw. oder eine thermoplastische Komponente, vorzugsweise Polyvinylpyrrolidon (PVP), aufweisen. Vorzugsweise wird das Substrat aus einem Streckmetall, einem Metalldrahtgewebe, einem Vlies, einem Substrat mit einer strukturierten Oberfläche, die eine mechanische Verzahnung erlaubt, oder einer Metallfolie, vorzugsweise einer Kupferfolie oder einer Aluminiumfolie ausgebildet. In besonders bevorzugter Weise wird eine Kupferfolie oder eine Aluminiumfolie verwendet, auf die ein Kohlenstoffprimer aufgebracht wird.

Der Trockenfilm wird typischerweise mit einer Dicke kleiner 500 µm, vorzugweise kleiner 300 µm, besonders vorzugsweise kleiner 150 µm ausgebildet, um einen möglichst dünnen und gleichzeitig mechanisch stabilen Trockenfilm zu erhalten.

Erfindungsgemäß wird eine Trockenpulvermischung eingesetzt, die Polytetrafluorethylen enthält. Die Trockenpulvermischung enthält ferner i) porösen Kohlenstoff und Schwefel, oder ii) ein Leitadditiv und ein Aktivmaterial. Für eine Kohlenstoff/Schwefel-Kathode enthält die Trockenpulvermischung erfindungsgemäß porösen Kohlenstoff (beispielsweise porösen Ruß oder Kohlenstoffnanoröhren), Schwefel, Polytetrafluorethylen und gegebenenfalls ein weiteres Leitadditiv. Für eine Lithium-Ionen-Elektrode kann neben Polytetrafluorethylen und einem zusätzlichen Leitadditiv noch ein Aktivmaterial, vorzugsweise Lithium-Eisenphosphat (LFP), Lithiummanganoxid (LMO), Nickel-Mangan-Cobalt (NMC), nickelreiches Lithium-Nickel-Mangan-Cobaltoxid (NMC 622 oder NMC 811), Lithium-Nickel-Cobalt-Aluminiumoxid (NCA), Lithium-Cobalt-Oxid (LCO), Lithium-Mangan-Nickeloxid (LMNO) und bzw. oder Lithiumtitanat (LTO) verwendet werden. Besonders vorteilhaft ist das beschriebene Verfahren für Kathodenwerkstoffe in Lithium-Ionen-Batterien, da diese nur selten wässrig verarbeitet werden.

Bei einer Walzvorrichtung zur Durchführung des Verfahrens ist eine Trockenpulvermischung aus einem Pulverförderer in den Walzenspalt zwischen einer ersten Kalanderwalze und einer zweiten Kalanderwalze geführt. Die erste und die zweite Kalanderwalze sind so ausgebildet oder angetrieben, dass die erste Kalanderwalze eine höhere Drehumfangsgeschwindigkeit als die zweite Kalanderwalze aufweist und die erste und die zweite Kalanderwalze jeweils entgegengesetzte Drehrichtung aufweisen.

Zusätzlich zur Trockenpulvermischung kann ein Substrat, insbesondere eine Folie oder ein Netz durch den Walzenspalt geführt sein.

Es ist u.a. beispielsweise für Batterieanwendungen unter Umständen notwendig, eine sogenannte intermittierende Beschichtung durchzuführen. Diese erlaubt die Beschichtung in Form von Streifen quer zur Beschichtungsrichtung. Dazu wird die Beschichtung in regelmäßigen und zeitlich genau abgestimmten Intervallen ausgesetzt, so dass unbeschichtete Streifen entstehen. Diese zeitliche Abstimmung und die Genauigkeit der erzeugbaren Formen und die Exaktheit der Kanten ist begrenzt möglich. So kann sich die Prozessgeschwindigkeit für eine intermittierende Ausbildung von Trockenfilmen und eine Beschichtung auf ein Subsrat auf die Hälfte im Vergleich zu durchgängigen Beschichtungen (~30 m/min statt ~60 m/min) reduzieren.

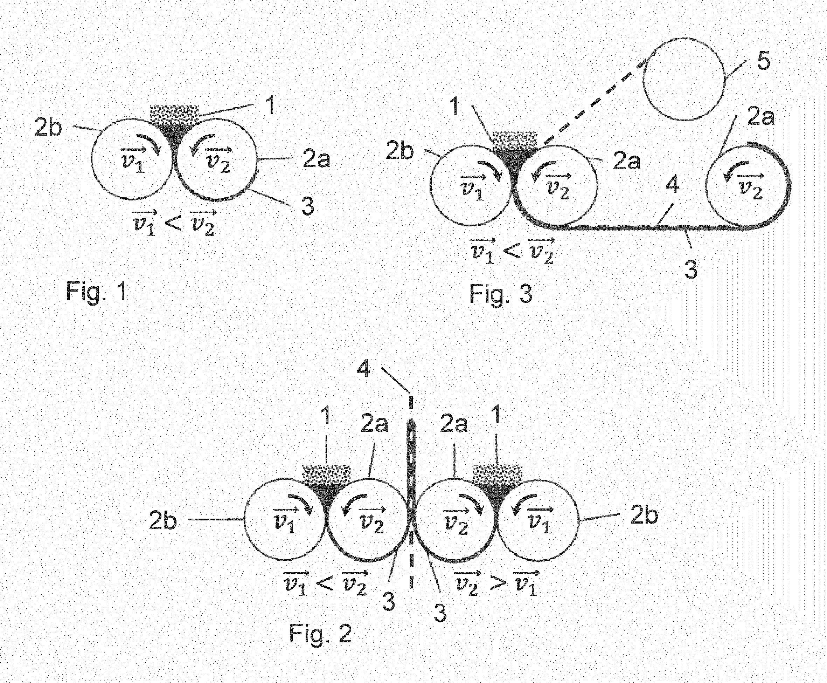

Mit dem erfindungsgemäßen Verfahren ist es möglich, durch Verwendung einer haftvermittelnden Primerschicht auf der jeweiligen Substratoberfläche eine solche Strukturierung zu erreichen. Dafür ist es notwendig die Substratoberfläche, auf die der Trockenfilm ausgebildet werden soll, zuvor in der gewünschten Geometrie mit der haftvermittelnden Primerschicht zu beschichten. Da es sich dabei nur um eine etwa 1 µm (trocken) dicke Schicht handelt, ist es einfacher, die Primerschicht anstatt der eigentlichen Elektrodenschicht zu strukturieren (verschiedene Druck- oder Sprühverfahren). Beliebige Geometrien (rechteckig, aber auch rund oder sonstiges) sind möglich. Die Trockenfilmschicht würde in einem solchen Verfahren (z.B. Fig.2) weiterhin vollständig auf der schneller rotierenden ersten Kalanderwalze gebildet. Jedoch nur an den Stellen, wo die Substratoberfläche mit einer Primerschicht versehen ist, erfolgt die Schichtbildung mit dem Trockenfilm. Der überschüssige (nicht auf die Substratoberfläche übertragene) Trockenfilm wird von der ersten Kalanderwalze entfernt, neu aufbereitet und kann wiederverwendet werden. So können beliebige Geometrien mit guter Präzision ohne Verringerung der Prozessgeschwindigkeiten realisiert werden.

Es können auch zwei Kalanderwalzenpaare mit ersten und zweiten Kalanderwalzen nebeneinander spiegelsymmetrisch so angeordnet sein, dass zwischen zwei ersten Kalanderwalzen ein Walzenspalt ausgebildet ist, durch den Trockenfilm an zwei Seiten eines ebenfalls durch diesen Walzenspalt geführten Substrats aufgebracht wird, und die beiden ersten Kalanderwalzen eine entgegengesetzte Drehrichtung aufweisen.

In einer weiteren Ausführungsform kann eine weitere erste sich um eine Rotationsachse drehende Kalanderwalze vorhanden sein, auf die ein zwischen der ersten Kalanderwalze und der zweiten Kalanderwalze gebildeter Trockenfilm nach dem Austritt aus dem Walzenspalt aufwickelbar ist. Die beiden ersten Kalanderwalzen sollten die gleiche Drehumfangsgeschwindigkeit aufweisen. Bei dieser Ausführungsform kann ein Substrat, bevorzugt eine Folie mit dem Trockenfilm durch den Walzenspalt zwischen erster Kalanderwalze und zweiter Kalanderwalze geführt und auf die weitere erste Kalanderwalze aufgewickelt werden.

Ein Trockenfilm weist anisotrop ausgebildete Fibrillen auf. Durch Scherung im Walzenspalt bilden sich diese Fibrillen bevorzugt anisotrop in Laufrichtung der ersten Walze und der zweiten Walze aus. Eine Länge der Fibrillen liegt im Bereich zwischen 0,1 µm und 1000 µm. Alternativ oder zusätzlich kann der Trockenfilm mit den Fibrillen eine Rauheit Rₐ von unter 10 µm aufweisen. Der Trockenfilm ist typischerweise auf einem Substrat angeordnet.

Vorzugsweise weist ein elektrochemischer Speicher oder ein elektrochemischer Wandler einen Trockenfilm mit den beschriebenen Eigenschaften oder ein mit dem Trockenfilm versehenes Substrat mit den beschriebenen Eigenschaften auf.

Der Trockenfilm und das Substrat mit dem Trockenfilm sind bevorzugt nach dem beschriebenen Verfahren hergestellt, das beschriebene Verfahren ist also zum Herstellen des Trockenfilms und des Substrats mit dem Trockenfilm ausgebildet.

Für die Herstellung kann auch ein nicht fließfähiges Pulvergemisch eingesetzt werden. Dabei kann diese Nichtfließfähigkeit unter den Prüfbedingungen gemäß der Deutschen Norm EN ISO 6186 : 1998 (Stand August 1998) bestimmt werden.

Ausführungsbeispiele der Erfindung sind in den Zeichnungen dargestellt und werden nachfolgend anhand der Figuren 1 bis 3 erläutert.

Es zeigen:
- Fig. 1: eine seitliche schematische Ansicht einer Walzvorrichtung;
- Fig. 2: eine Figur 1 entsprechende Ansicht einer Doppelwalzvorrichtung und
- Fig. 3: eine Figur 1 entsprechende Ansicht der Walzvorrichtung mit Substratzuführung.

In Figur 1 ist in einer schematischen seitlichen Ansicht eine Walzvorrichtung dargestellt, bei der aus einem Pulverförderer 1 eine in dem Pulverförderer 1 gelagerte Trockenpulvermischung auf zwei in ihren Abmessungen identische verchromte Kalanderwalzen 2a und 2b gelangt und von diesen mittels wirkender Press- und Scherkräfte in einen stabilen Zustand überführt wird. Die erste Kalanderwalze 2a wird hierbei mit einer höheren Drehgeschwindigkeit betrieben als die zweite Kalanderwalze 2b, so dass ein sich ausbildender Trockenfilm 3 auf der ersten Kalanderwalze 2a nach dem kombinierten Press- und Schervorgang verbleibt.

Das verwendete Trockenpulver liegt in dem dargestellten Ausführungsbeispiel vorgemischt vor und weist 90 Gewichtsprozent Ketjenblack/Schwefel auf (1:2 m/m), 3 Gewichtsprozent Polytetrafluorethylen (PTFE) und 7 Gewichtsprozent mehrwandige Kohlenstoffnanoröhren (MWCNT). Für eine Lithium-Ionen-Elektrode wird typischerweise 95 Gewichtsprozent Lithium-Mangan-Oxid, 3 Gewichtsprozent eines Leitadditivs (in diesem Fall mehrwandige Kohlenstoffnanoröhren, MWCNT) und 2 Gewichtsprozent PTFE verwendet. In einem zwischen der ersten Walze 2a und der zweiten Walze 2b befindlichen Kalanderspalt erfolgt ein Fibrillieren des Trockenpulvergemischs, wodurch der geschlossene Trockenfilm 3 erzeugt wird.

Die Drehgeschwindigkeiten der ersten Walze 2a und der zweiten Walze 2b liegen in einem Bereich zwischen 10:9 und 10:4, im gezeigten Ausführungsbeispiel bei 2:1 nämlich entweder 10 mm/s:5 mm/s oder 20 mm/s:10 mm/s. In weiteren Ausführungsbeispielen können je nach Parameterfenster und Pulverzustand aber auch 80 mm/s:40 mm/s als Drehgeschwindigkeiten verwendet werden. Höhere Drehgeschwindigkeiten resultieren hierbei in dünneren Trockenfilmen mit einer geringer ausgeprägten Riffelstruktur bzw. geringer ausgeprägten Fibrillen, also einer geringeren Oberflächenrauheit Rₐ. Die Fibrillen weisen im gezeigten Ausführungsbeispiel eine Länge von im Durchscnitt 10 µm auf und sind anisotrop in Laufrichtung der Walzen 2a und 2b ausgebildet. Durch die Drehgeschwindigkeiten wird auf das Pulver im Walzenspalt, der eine Breite von 50 µm im dargestellten Ausführungsbeispiel aufweist, aber auch zwischen 10 µm und 300 µm breit sein kann, eine Scherkraft ausgeübt, die eine Fibrillenbildung entlang der Laufrichtung bewirkt. Dies hat eine mechanische Stabilisierung und Filmbildung auf der mit höherer Geschwindigkeit rotierenden ersten Walze 2a zur Folge und ein Ausbilden eines freistehenden Films wird vermieden (kann jedoch bei Bedarf durch mechanische Entfernung, beispielsweise mittels eines Rakelmessers, von der Walze 2a erreicht werden). Stattdessen wird ein auf der schnelleren Walze 2a geträgerter Trockenfilm 3 erhalten, was speziell für Trockenfilme mit einer Dicke kleiner 200 µm aufgrund der begrenzten mechanischen Stabilität von Vorteil ist.

Die erste Walze 2a und die zweite Walze 2b können im dargestellten Ausführungsbeispiel jeweils auf eine Temperatur von 100 °C erhitzt werden. Zudem kann die erste Walze 2a mit einer haftvermittelnden Oberfläche versehen sein, an der der Trockenfilm 3 anhaftet, während die zweite Walze 2b eine für den Trockenfilm 3 haftvermindernde Oberfläche aufweist. Eine wirkende Linienkraft zwischen der ersten Walze 2a und der zweiten Walze 2b beträgt im dargestellten Ausführungsbeispiel 400 N.

Durch anschließendes Laminieren auf einen mit thermoplastischen Primer bzw. Binder versehenen Stromableiter kann der Trockenfilm 3 von der ersten Walze 2a entfernt und somit beispielsweise eine lösungsmittelfrei gefertigte Elektrode generiert werden.

In Figur 2 ist in einer Figur 1 entsprechenden Ansicht ein Ausführungsbeispiel wiedergegeben, bei der ein symmetrischer Aufbau aus zwei der in Figur 1 gezeigten Walzvorrichtung vorliegt. Wiederkehrende Merkmale sind in dieser Figur wie auch in der folgenden Figur mit identischen Bezugszeichen versehen.

Das Substrat 4 wird in dem dargestellten Ausführungsbeispiel zwischen zwei Walzvorrichtungen hindurchgeführt, die spiegelsymmetrisch zueinander angeordnet sind. Die beiden ersten Walzen 2a, auf denen jeweils einer der Trockenfilme 3 geführt ist, sind einander zugewandt, so dass das Substrat 4 beidseitig mit dem Trockenfilm 3 versehen werden kann, da beide Oberflächen jeweils einer der Walzen 2a zugewandt sind. Das Substrat 4 wird hierzu mit einer Geschwindigkeit bewegt, die gerade der Drehumfangsgeschwindigkeit der beiden ersten Walzen 2a entspricht. Die beiden Walzvorrichtungen sind in dem gezeigten Ausführungsbeispiel bis auf die spiegelsymmetrische Anordnung identisch aufgebaut, weisen also insbesondere gleiche Abmessungen auf, und werden mit gleichen Drehgeschwindigkeiten bzw. Drehumfangsgeschwindigkeiten betrieben. In weiteren Ausführungsbeispielen können auch in ihrer Zusammensetzung sich voneinander unterscheidende Trockenfilme 3 auf das Substrat 4 aufgebracht werden, in dem in Figur 2 wiedergegebenen Ausführungsbeispiel sind die Trockenfilme 3 jedoch identisch.

Das beschriebene Verfahren erlaubt zudem die Herstellung einer Elektrode mit alternativen Stromableitern als Substrat 4, z. B. perforierten Substraten mit geringem Flächengewicht wie perforierte Metallfolien oder leitfähigen Geweben. In dem in Figur 2 gezeigten Ausführungsbeispiel ist das Substrat 4 eine Aluminiumfolie mit einem Kohlenstoffprimer als beidseitiger Beschichtung.

Es wird somit eine kontinuierliche Filmherstellung für Batterieelektroden für Primär- und Sekundärbatterien, z. B. Lithium-Ionen-Batterien, Lithium-Schwefel-Batterien, Natrium-Schwefel-Batterien, Festkörperbatterien, Supercapelektroden, Elektroden für Brennstoffzellen, Elektroden für Elektrolysezellen, Elektroden für weitere elektrochemische Elemente, aber auch Filtermembranen oder adsorptive Beschichtungen durch Verwendung von porösen Partikeln, dekorative Schichten, optische Schichten für Absorption und bzw. oder Schichten aus feuchtigkeitsempfindlichen oder lösemittelempfindlichen Werkstoffen ermöglicht.

Figur 3 zeigt in einer Figur 1 entsprechenden schematischen seitlichen Ansicht ein weiteres Ausführungsbeispiel der Erfindung, bei dem auf einer Substratrolle 5 das Substrat 4 in Form einer Folie aufgewickelt ist und in Folienform in den Walzenspalt eingebracht wird, so dass der sich ausbildende Trockenfilm 3 direkt im Walzenspalt auf das Substrat 4 laminiert wird. Der Trockenfilm 3 wird bei diesem Ausführungsbeispiel nicht mehr direkt, also in unmittelbar berührenden Kontakt auf der ersten Walze 2a gelagert, sondern nur noch indirekt auf der ersten Walze 2a geführt und auf einer weitere Walze 2a aufgewickelt.

Das beschriebene Verfahren erlaubt daher eine Elektrodenherstellung direkt aus einem vorgemischten Trockenfilmpulver ohne zusätzliche Schritte zur Fibrillierung, so dass auch kein freistehender Film geformt werden muss. Das Verfahren kann für eine Vorfibrillierung genutzt werden, bei der eine Erhöhung der mechanischen Stabilität des Trockenfilms möglich ist. Zudem kann der freistehende Film durch Ablösen von der Trägerrolle realisiert werden. Durch die Umlaufgeschwindigkeit bzw. die Drehumfangsgeschwindigkeiten der ersten Walze 2a und der zweiten Walze 2b und der in Richtung des Kalanderspalts bzw. Walzenspalts wirkenden Presskraft kann eine Beladung und Dichte eingestellt werden. Die Trockenfilmbildung erfolgt selbstdosierend, die resultierende Schichtdicke ergibt sich aus der verwendeten Presskraft der beiden Walzen 2a und 2b. Über einen kontinuierlichen Eintrag einer bestimmten (an Prozessparameter angepassten) Pulvermenge, beispielsweise über den Pulverförderer 1 oder ein Fördersubstrat erfolgt eine Vordosierung. Auf diese Weise kann ebenfalls Einfluss auf die Schichtdicke genommen werden.

Die mechanische Stabilität des Trockenfilms 3 wird durch die verwendeten Presskräfte und Rotationsgeschwindigkeiten (Scherraten) eingestellt. Im Vergleich zu freistehenden Filmen, die im Walzenspalt bei gleichen Rotationsgeschwindigkeiten der Walzen 2a und 2b lediglich gepresst wurden, weisen die mit dem vorgeschlagenen Verfahren hergestellten Trockenfilme 3 eine erheblich gesteigerte mechanische Stabilität auf.

Lediglich in den Ausführungsbeispielen offenbarte Merkmale der verschiedenen Ausführungsformen können miteinander kombiniert und einzeln beansprucht werden.

## Patentansprüche

1. Verfahren zum Herstellen eines Trockenfilms (3), bei dem
eine Trockenpulvermischung durch eine Walzvorrichtung mit einer ersten Walze (2a) und einer zweiten Walze (2b) zu dem Trockenfilm (3) verarbeitet wird,
wobei die erste Walze (2a) eine höhere Drehumfangsgeschwindigkeit als die zweite Walze (2b) aufweist,
wobei eine Trockenpulvermischung eingesetzt wird, die Polytetrafluorethylen enthält, wobei die Trockenpulvermischung ferner i) porösen Kohlenstoff und Schwefel enthält oder ii) ein Leitadditiv und ein Aktivmaterial enthält, und
wobei die erste Walze (2a) und/oder die zweite Walze (2b) mindestens eine beheizbare Walze ist und die Temperatur der mindestens einen beheizbaren Walze zwischen 80 °C und 120 °C liegt,
**dadurch gekennzeichnet, dass**
der Trockenfilm (3) auf der ersten Walze (2a) gelagert wird, und ein Verhältnis der Drehumfangsgeschwindigkeit der ersten Walze (2a) zu der Drehumfangsgeschwindigkeit der zweiten Walze (2b) von 10:5 bis 10:1 eingehalten wird.

2. Verfahren nach Anspruch 1, **dadurch gekennzeichnet, dass** ein Verhältnis der Drehumfangsgeschwindigkeit der ersten Walze (2a) zu der Drehumfangsgeschwindigkeit der zweiten Walze (2b) von 10:5 bis 10:3, besonders vorzugsweise 2:1, eingehalten wird.

3. Verfahren nach Anspruch 1 oder Anspruch 2, **dadurch gekennzeichnet, dass** die Walzvorrichtung eine Kalanderwalzvorrichtung ist.

4. Verfahren nach einem der vorhergehenden Ansprüche, **dadurch gekennzeichnet, dass** für die Herstellung eines Trockenfilms ein nicht fließfähiges Pulvergemisch eingesetzt wird.

5. Verfahren nach einem der vorhergehenden Ansprüche, **dadurch gekennzeichnet, dass** die erste Walze (2a) mit einer haftvermittelnden Modifizierung versehen ist und/oder die zweite Walze (2b) mit einer haftmindernden Modifizierung versehen ist.

6. Verfahren nach einem der vorhergehenden Ansprüche, **dadurch gekennzeichnet, dass** der Trockenfilm (3) auf ein Substrat (4) aufgebracht wird, wobei vorzugsweise das Substrat (4) zum Aufbringen mit einer Geschwindigkeit bewegt wird, die der Drehumfangsgeschwindigkeit der ersten Walze (2a) entspricht.

7. Verfahren nach dem vorhergehenden Anspruch, **dadurch gekennzeichnet, dass** das Substrat (4) über die erste Walze (2a) bewegt wird, während der Trockenfilm (3) auf dem Substrat (4) ausgebildet wird.

8. Verfahren nach einem der vorhergehenden Ansprüche, **dadurch gekennzeichnet, dass** der Trockenfilm (3) von der ersten Walze (2a) und der zweiten Walze (2b) mit einer zwischen den Walzen im Walzenspalt wirkenden Linienkraft von 100 N/cm bis 10 kN/cm, vorzugsweise 400 N/cm ausgebildet wird.

9. Verfahren nach einem der vorhergehenden Ansprüche, **dadurch gekennzeichnet, dass** das Substrat (4) vor dem Laminieren des Trockenfilms (3) auf einer jeweiligen Oberfläche mit einem, vorzugsweise thermoplastischen oder reaktivem, Primer und/oder einem, vorzugsweise thermoplastischen, Binder versehen wird.

10. Verfahren nach einem der vorhergehenden Ansprüche, **dadurch gekennzeichnet, dass** das Substrat (4) aus einem metallischen Werkstoff, insbesondere aus einem Streckmetall, einem Metalldrahtgewebe, einem Vlies, einer Kupferfolie oder einer Aluminiumfolie mit einem aufgebrachten Kohlenstoffprimer eingesetzt wird.

11. Verfahren nach einem der vorhergehenden Ansprüche, **dadurch gekennzeichnet, dass** der Trockenfilm (3) mit einer Dicke kleiner 500 µm, vorzugweise kleiner 300 µm, besonders vorzugsweise kleiner 150 µm ausgebildet wird.

12. Verfahren nach einem der vorhergehenden Ansprüche, **dadurch gekennzeichnet, dass** ein Trockenfilm (3) ausgebildet wird, der anisotrop ausgebildete Fibrillen aufweist.

13. Verfahren nach einem der vorhergehenden Ansprüche, **dadurch gekennzeichnet, dass** mit einer haftvermittelnden Primerschicht auf jeweilig Substratoberflächenbereichen für die Ausbildung einer Strukturierung des Trockenfilms (3), bevorzugt in Form von Streifen oder rechteckförmig und besonders bevorzugt in Beschichtungsrichtung erreicht wird.

14. Verfahren nach einem der vorhergehenden Ansprüche, **dadurch gekennzeichnet, dass** eine Schichtbildung mit dem Trockenfilm nur an den Stellen erfolgt, die mit einer Primerschicht versehen worden sind.

## Claims

1. A method for producing a dry film (3), in which
a dry powder mixture is processed into the dry film (3) by a rolling device having a first roll (2a) and a second roll (2b),
wherein the first roll (2a) has a higher rotational peripheral speed than the second roll (2b),
wherein a dry powder mixture which contains polytetrafluoroethylene is used, wherein the dry powder mixture further contains i) porous carbon and sulfur or ii) a conductive additive and an active material, and
wherein the first roll (2a) and/or the second roll (2b) is at least one heatable roll and the temperature of the at least one heatable roll lies between 80 °C and 120 °C,
**characterized in that**
the dry film (3) is supported on the first roll, and
a ratio of the rotational peripheral speed of the first roll (2a) to the rotational peripheral speed of the second roll (2b) of 10:5 to 10:1 is maintained.

2. The method according to claim 1, **characterized in that** a ratio of the rotational peripheral speed of the first roll (2a) to the rotational peripheral speed of the second roll (2b) of 10:5 to 10:3, particularly preferably 2:1, is maintained.

3. The method according to claim 1 or claim 2, **characterized in that** the rolling device is a calender rolling device.

4. The method according to one of the preceding claims, **characterized in that**, for the production of a dry film, a non-flowable powder mixture is used.

5. The method according to one of the preceding claims, **characterized in that** the first roll (2a) is provided with an adhesion-enhancing modification, and/or the second roll (2b) is provided with an adhesion-reducing modification.

6. The method according to one of the preceding claims, **characterized in that** the dry film (3) is applied to a substrate (4), wherein preferably, for the application, the substrate (4) is moved at a speed corresponding to a speed which corresponds to the rotational peripheral speed of the first roll (2a).

7. The method according to the preceding claim, **characterized in that** the substrate (4) is moved over the first roll (2a) while the dry film (3) is formed on the substrate (4).

8. The method according to one of the preceding claims, **characterized in that** the dry film (3) is formed by the first roll (2a) and the second roll (2b) with a linear force, acting in the nip between the rolls, of 100 N/cm to 10 kN/cm, preferably 400 N/cm.

9. The method according to one of the preceding claims, **characterized in that**, prior to the lamination of the dry film (3) on a respective surface, the substrate (4) is provided with a, preferably thermoplastic or reactive, primer and/or a, preferably thermoplastic, binder.

10. The method according to one of the preceding claims, **characterized in that** the substrate (4) consisting of a metallic material, especially of an expanded metal, a metal wire mesh, a nonwoven fabric, a copper foil or an aluminum foil with an applied carbon primer is used.

11. The method according to one of the preceding claims, **characterized in that** the dry film (3) is formed with a thickness of less than 500 µm, preferably less than 300 µm, particularly preferably less than 150 µm.

12. The method according to one of the preceding claims, **characterized in that** a dry film (3), which has anisotropically formed fibrils, is formed.

13. The method according to one of the preceding claims, **characterized in that**, with an adhesion-enhancing primer layer on respective substrate surface regions for the formation of a structuring of the dry film (3), preferably in the form of strips or in the shape of a rectangle and, particularly preferably in the direction of coating, is achieved.

14. The method according to one of the preceding claims, **characterized in that** a formation of a layer with the dry film occurs only in regions that have been provided with a primer layer.

## Revendications

1. Procédé de fabrication d'un film sec (3), selon lequel
un mélange de poudre sèche est transformé en le film sec (3) par un dispositif de laminage avec un premier rouleau (2a) et un deuxième rouleau (2b),
dans lequel le premier rouleau (2a) présente une vitesse périphérique de rotation plus élevée que le deuxième rouleau (2b),
dans lequel un mélange de poudre sèche est utilisé, qui contient du polytétrafluoroéthylène, dans lequel le mélange de poudre sèche contient en outre i) du carbone poreux et du soufre ou ii) un additif conducteur et un matériau actif, et
dans lequel le premier rouleau (2a) et/ou le deuxième rouleau (2b) est au moins un rouleau pouvant être chauffé et la température du au moins un rouleau pouvant être chauffé est comprise entre 80 °C et 120 °C,
**caractérisé en ce que**
le film sec (3) est monté sur le premier rouleau (2a), et
un rapport entre la vitesse périphérique de rotation du premier rouleau (2a) et la vitesse périphérique de rotation du deuxième rouleau (2b) de 10:5 à 10:1 est maintenu.

2. Procédé selon la revendication 1, **caractérisé en ce qu'**un rapport entre la vitesse périphérique de rotation du premier rouleau (2a) et la vitesse périphérique de rotation du deuxième rouleau (2b) de 10:5 à 10:3, de préférence encore de 2:1, est maintenu.

3. Procédé selon la revendication 1 ou revendication 2, **caractérisé en ce que** le dispositif de laminage est un dispositif de laminage à calandre.

4. Procédé selon l'une quelconque des revendications précédentes, **caractérisé en ce qu'**un mélange de poudres non fluides est utilisé pour la fabrication d'un film sec.

5. Procédé selon l'une quelconque des revendications précédentes, **caractérisé en ce que** le premier rouleau (2a) est pourvu d'une modification favorisant l'adhérence et/ou le deuxième rouleau (2b) est pourvu d'une modification réduisant l'adhérence.

6. Procédé selon l'une quelconque des revendications précédentes, **caractérisé en ce que** le film sec (3) est appliqué sur un substrat (4), dans lequel de préférence le substrat (4) est déplacé pour l'application à une vitesse qui correspond à la vitesse périphérique de rotation du premier rouleau (2a).

7. Procédé selon la revendication précédente, **caractérisé en ce que** le substrat (4) est déplacé au-dessus du premier rouleau (2a), pendant que le film sec (3) est réalisé sur le substrat (4).

8. Procédé selon l'une quelconque des revendications précédentes, **caractérisé en ce que** le film sec (3) est réalisé par le premier rouleau (2a) et le deuxième rouleau (2b) avec une force linéaire de 100 N/cm à 10 kN/cm, de préférence 400 N/cm, agissant entre les rouleaux dans l'emprise.

9. Procédé selon l'une quelconque des revendications précédentes, **caractérisé en ce que** le substrat (4) est pourvu d'un apprêt, de préférence thermoplastique ou réactif, et/ou d'un liant, de préférence thermoplastique, sur une surface respective avant la stratification du film sec (3).

10. Procédé selon l'une quelconque des revendications précédentes, **caractérisé en ce que** le substrat (4) composé d'un matériau métallique, en particulier d'un métal déployé, d'un tissu de fils métalliques, d'un non-tissé, d'une feuille de cuivre ou d'une feuille d'aluminium avec un apprêt de carbone déposé est utilisé.

11. Procédé selon l'une quelconque des revendications précédentes, **caractérisé en ce que** le film sec (3) est réalisé avec une épaisseur inférieure à 500 µm, de préférence inférieure à 300 µm, de préférence encore inférieure à 150 µm.

12. Procédé selon l'une quelconque des revendications précédentes, **caractérisé en ce qu'**un film sec (3) est réalisé, qui présente des fibrilles réalisées de manière anisotrope.

13. Procédé selon l'une quelconque des revendications précédentes, **caractérisé en ce qu'**une couche d'apprêt favorisant l'adhérence sur des zones de surface respectives du substrat permet la réalisation d'une structuration du film sec (3), de préférence sous forme de bandes ou de forme rectangulaire et de préférence encore dans le sens du revêtement.

14. Procédé selon l'une quelconque des revendications précédentes, **caractérisé en ce qu'**une formation de couche avec le film sec n'a lieu qu'aux endroits qui ont été pourvus d'une couche d'apprêt.
